# EUROPÄISCHE PATENTSCHRIFT

(11) **EP 0 823 346 B1**
(45) Veröffentlichungstag und Bekanntmachung des Hinweises auf die Patenterteilung: **22.03.2000**
(21) Anmeldenummer: 97110262.9
(22) Anmeldetag: 24.06.1997
(51) Int. Cl.: B60K 17/04

(54) **Aussenplaneten-Achse für Kraftfahrzeuge**
Planetary hub reduction axle for motor vehicles
Pont planétaire pour véhicules

(30) Priorität: 03.08.1996 DE 19631479
(43) Veröffentlichungstag der Anmeldung: 11.02.1998
(73) Patentinhaber: MAN Nutzfahrzeuge Aktiengesellschaft, 80976 München (DE)
(72) Erfinder: Schaller, Carl-Viktor, Dr., 82194 Gröbenzell (DE); Deichsel, Klaus, 80995 München (DE)

(56) Entgegenhaltungen:
- DE-A- 1 430 849
- DE-A- 2 029 948
- US-A- 3 238 812

## Beschreibung

Die Erfindung betrifft eine Außenplaneten-Achse für Kraftfahrzeuge gemäß dem Oberbegriff des Patentanspruches 1.

Aus der DE 39 28 432 A1 (US-PS 4,901,599) ist ein zwischen den Achswellen eines Ausgleichsgetriebes angeordneter Haltebock zur Fixierung einer die Ritzel tragenden Querwelle bekannt.

Aus der EP 0 138 913 B1 ist ein linsenförmiges Distanzelement bekannt, das zur distanzsichernden Beabstandung zweier Steckwellen in einem Ausgleichsgetriebe eines Fahrzeuges zwischen den Stirnseiten der Steckwellen angeordnet ist.

Aufgabe der Erfindung ist es, die Herstellung von Außenplaneten-Achsen technisch und wirtschaftlich zu optimieren sowie deren Geräuschverhalten zu verbessern.

Diese Aufgabe wird erfindungsgemäß durch die Merkmale des Anspruches 1 gelöst.

Durch die erfindungsgemäße Lösung ist eine Außenplaneten-Achse für Kraftfahrzeuge mit schrägverzahnten Planetengetrieben gegeben, die neben einem deutlich verbesserten Geräuschverhalten zusätzlich kostengünstiger zu fertigen ist, da gegenüber Außenplaneten-Achsen herkömmlicher Bauart axialkraftabstützende Bauteile an Sonnenrad bzw. Steckwelle einsparbar geworden sind. Erfindungswesentlich ist, daß nur in einer Momentenrichtung, beispielsweise Schubbelastung, die Axialkraft an dem Sonnenrad des Planetengetriebes über ein Lager gegen die Radnabe abgestützt wird, während in einer zweiten Momentenrichtung, beispielsweise Zugbeanspruchung, die an dem Sonnenrad auftretende Axialkraft über die mit dem Sonnenrad verbundene Steckwelle an im Zentralbereich des Ausgleichsgetriebes vorgesehene Abstützelemente weitergegeben wird. Bei zueinander gegensinnig gerichteter Schrägungsrichtung der Sonnenräder des rechten und linken Planetengetriebes können sich die zueinander gegensinnig gerichteten Axialkräfte von rechter und linker Steckwelle solcherart kompensieren, daß die im Zentralbereich des Ausgleichsgetriebes anliegenden Abstützelemente frei von Axialkraftbeanspruchung sind. Drehzahlunterschiede zwischen den Steckwellen und den an diesen im Zentralbereich des Ausgleichsgetriebes anliegenden Abstützelementen können durch Gleiten aufgenommen werden.

Einer weiterführenden Ausgestaltung der Erfindung zufolge, können zur Axialabstützung die Enden der Steckwellen im Zentralbereich des Ausgleichsgetriebes stirnseitig unmittelbar an Anlagepilzen eines getriebeinternen Ausgleichssternes gleitfähig anliegen. Die Anlagepilze können einteilig mit dem Ausgleichsstern gebildet sein, wodurch zusätzliche Bauteile eingespart werden können.

In weiterer Ausgestaltung der Erfindung können zur Axialabstützung die Enden der Steckwellen im Zentralbereich des Ausgleichsgetriebes stirnseitig eingesetzte Gleitsteine tragen, die an im Ausgleichsstern gelagerten, separaten Anlagepilzen gleitfähig zur Anlage kommen. Die Gleitsteine können durch Einpressen oder dergleichen in die Steckwellen eingesetzt sein und diese vor einer Abnutzung durch Abrieb schützen. Die separaten Anlagepilze können in Axialbohrungen im Ausgleichsstern angeordnet und durch Sprengringe im Ausgleichsstern fixiert sein. Anstelle von Sprengringen können auch andere, hierfür geeignete Sicherungselemente verwendet sein. Somit sind die von einer Abnutzung durch Abrieb betroffenen Bauteile im Inneren des Ausgleichsgetriebes auswechselbar.

Gemäß einer weiterführenden Ausgestaltung der Erfindung können zur Axialabstützung die Enden der Steckwellen im Zentralbereich des Ausgleichsgetriebes gegenseitig an einem im Ausgleichsstern axial frei beweglich angeordneten Gleitzapfen gleitfähig anliegen. Der Gleitzapfen kann in einer axialen Durchgangsbohrung im Ausgleichsstern angeordnet und durch Sicherungselemente im Ausgleichsstern gehalten sein.

In weiterer Ausgestaltung der Erfindung können zur Axialabstützung die stirnseitigen Enden der Steckwellen im Zentralbereich des Ausgleichsgetriebes gleitfähig aneinanderliegen. Hierzu durchgreifen die Enden der Steckwellen spielfrei eine querschnittsgrößere axiale Durchgangsbohrung im Ausgleichsstern. Die stirnseitigen Enden der Steckwellen können dabei gewölbt oder gerade ausgeführt sein und Relativbewegungen bei Drehzahlunterschieden zulassen.

Die Verwendung eines axial frei beweglichen Gleitzapfens oder das Vorsehen einer direkten Axialabstützung der Steckwellen durch unmittelbares Aneinanderliegen ihrer Stirnseiten haben den Vorteil, daß der Ausgleichsstern von der Aufnahme von Axialkräften über die Steckwellen, beispielsweise bei Betrieb mit eingelegter Quersperre, freigestellt werden kann.

In weiterer Ausgestaltung der Erfindung können die mit den Steckwellen verbundenen Sonnenräder radnabenseitig durch sich an Anlageringen der Radnaben abstützende Nadellager einseitig axial fixiert sein. Anstelle von Nadellagern können Kegelrollenlager, Vierpunktlager oder Schrägkugellager verwendet sein.

In weiterer Ausgestaltung der Erfindung können die Planetengetriebe Sonnenräder mit Doppelschrägverzahnung aufweisen. Dadurch können in vorteilhafter Weise auch gelenkte Außenplaneten-Achsen mit schrägverzahnten Planetengetrieben versehen werden.

Nachstehend ist die Erfindung anhand in der Zeichnung dargestellter Ausführungsbeispiele näher erläutert.

In der Zeichnung zeigen:
- Fig. 1: ausschnittsweise eine erste Ausführungsart einer Außenplaneten-Achse eines Fahrzeuges in Schnittdarstellung, und
- Fig. 2: als vergrößerten Ausschnitt einer Außenplaneten-Achse gemäß Fig. 1 ein Ausgleichsgetriebe in Schnittdarstellung, und
- Fig. 3: als vergrößerten Ausschnitt einer zweiten Ausführungsart einer Außenplaneten-Achse ein Ausgleichsgetriebe in Schnittdarstellung, und
- Fig. 4: als vergrößerten Ausschnitt einer dritten Ausführungsart einer Außenplaneten-Achse ein Ausgleichsgetriebe in Schnittdarstellung, und
- Fig. 5: als vergrößerten Ausschnitt einer vierten Ausführungsart einer Außenplaneten-Achse ein Ausgleichsgetriebe in Schnittdarstellung,
- Fig. 6: als vergrößerten Ausschnitt einer Außenplaneten-Achse gemäß Fig. 1 ein Planetengetriebe in Schnittdarstellung, und
- Fig. 7: als vergrößerten Ausschnitt einer fünften Ausführungsart einer Außenplaneten-Achse ein Planetengetriebe in Schnittdarstellung.

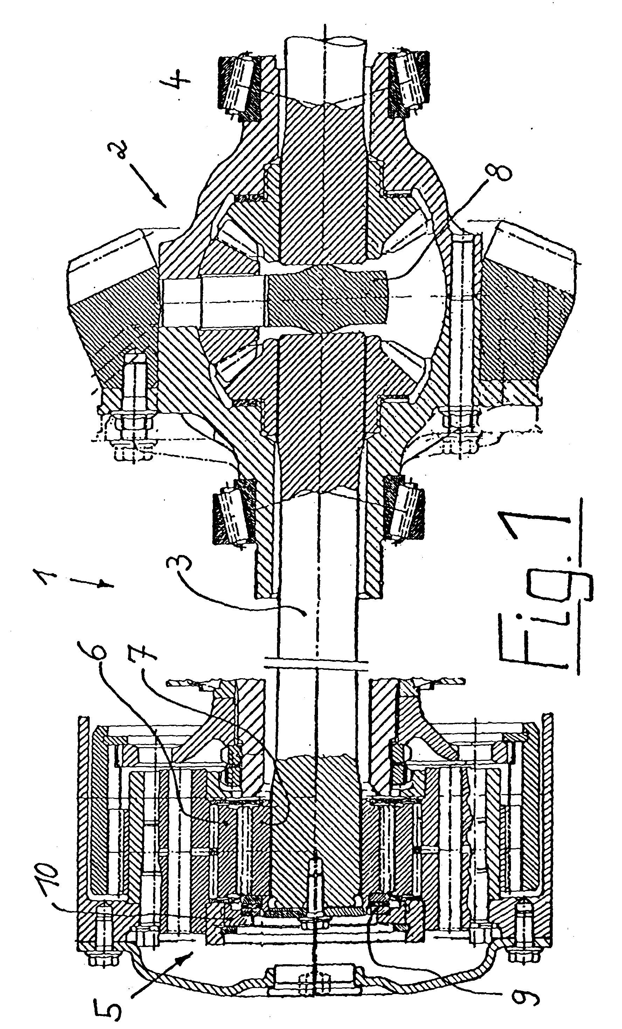

Fig. 1 zeigt in einer ersten Ausführungsart ausschnittsweise eine Außenplaneten-Achse 1 für Kraftfahrzeuge, die über ein achsinternes Ausgleichsgetriebe 2 von einem hier nicht gezeigten Fahrzeugantrieb angetrieben ist. Das Ausgleichsgetriebe 2 treibt über beiderseitig hiervon abgehende Steckwellen 3, 4 radseitig angeordnete Planetengetriebe 5 an.

Aus Platzgründen wird auf die Darstellung eines dem Planetengetriebe 5 gegenüberliegend angeordneten Planetengetriebes sowie auf die komplette Darstellung der das Planetengetriebe 5 antreibenden Steckwelle 4 verzichtet.

Das Planetengetriebe 5 weist ein schrägverzahntes Sonnenrad 1 auf, das hinsichtlich seiner Schrägungsrichtung gegenüber einem schrägverzahnten Sonnenrad des gegenüberliegend angeordneten, hier nicht gezeigten Planetengetriebes gegensinnig gerichtet angeordnet ist. So können sich die zur Mitte des Ausgleichsgetriebes 2 hin gerichteten Axialkräfte an den Steckwellen 3, 4 beiderseits eines getriebeinternen Ausgleichssternes 8 abstützen. Radseitig gerichtete Axialkräfte an den Steckwellen 3, 4 können sich axial über an fahrzeugaußenseitig der Stirnseiten der Sonnenräder 7 angeordnete Lager 9 gegen jeweilige Anlageringe 10 der Radnaben abstützen.

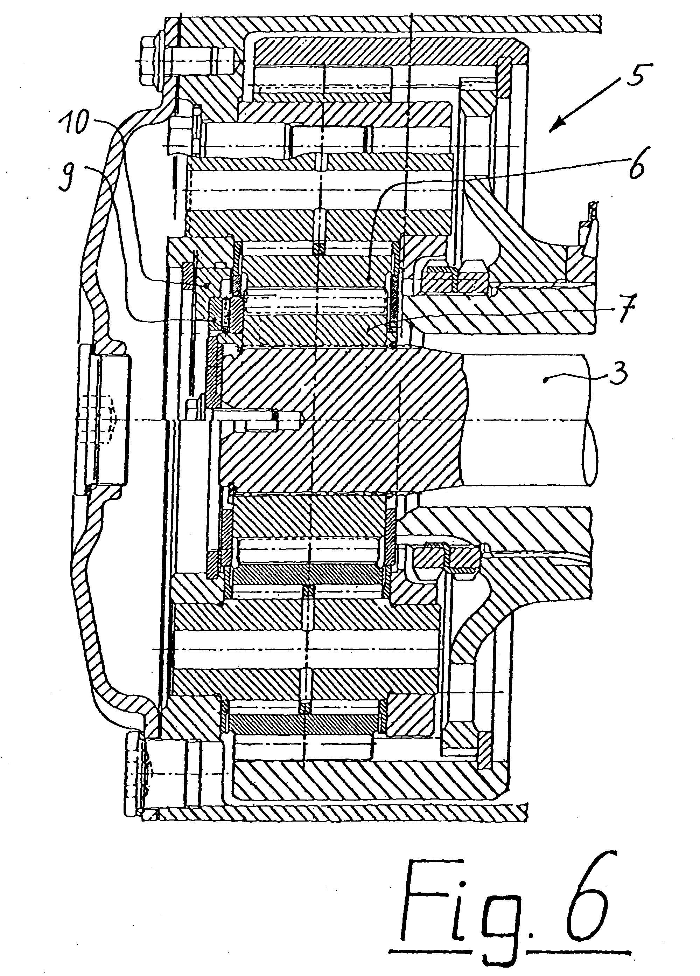

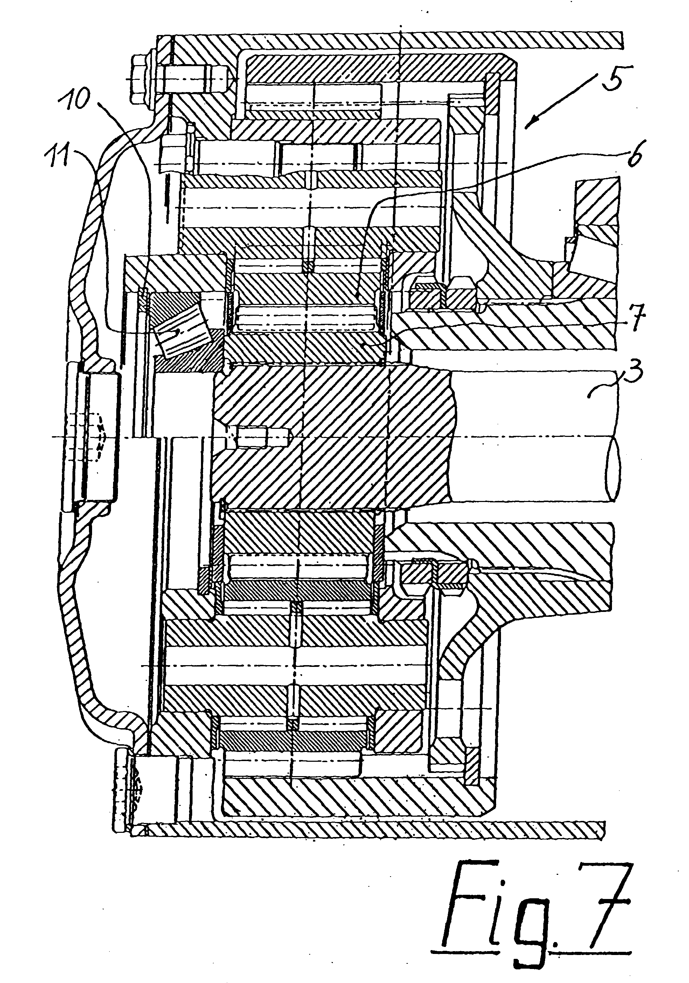

In der hier gezeigten Version sind die Lager durch Nadellager 9 realisiert. Anstelle von Nadellagern 9 (Fig. 6) können zur radnabenseitigen Axialkraftabstützung der Steckwelle 3, 4 und der darauf angeordneten Sonnenräder 7 auch Kegelrollenlager 11 (Fig. 7) oder hier nicht gezeigte Vierpunktlager oder Schrägkugellager verwendet sein, die sich axial gegen die Anlageringe 10 der Radnaben abstützen.

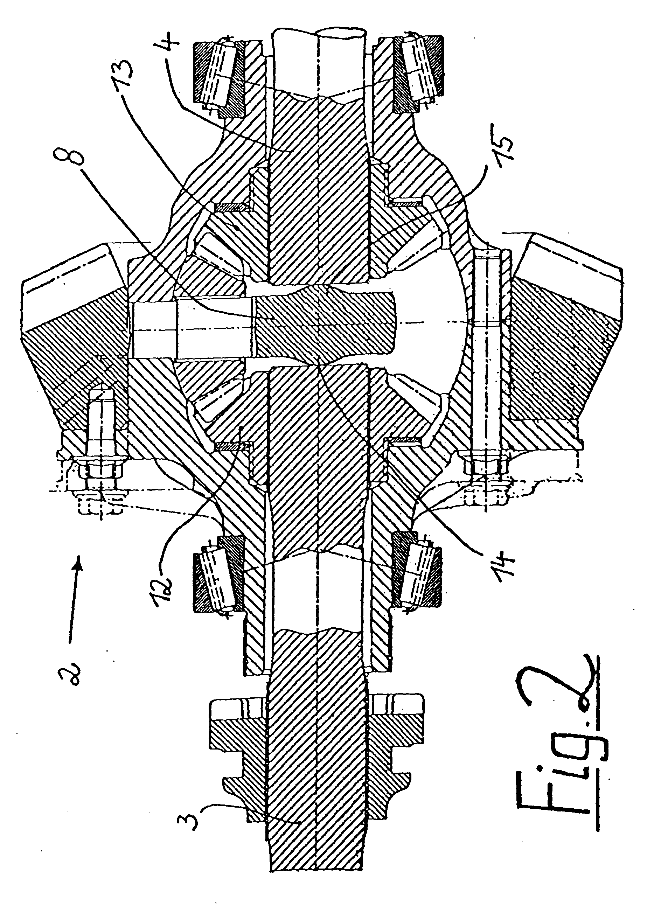

Fig. 2 zeigt als vergrößerten Ausschnitt der in Fig. 1 gezeigten Außenplaneten-Achse 1 das Ausgleichsgetriebe 2 mit den beiden, zu den hier nicht gezeigten Planetengetrieben führenden Steckwellen 3, 4. Die mit ihren Enden Kegelräder 12, 13 tragenden und in das Ausgleichsgetriebe 2 einmündenden Steckwellen 3, 4 liegen stirnseitig unmittelbar an Anlagepilzen 14, 15 des getriebeinternen Ausgleichssternes 8 gleitfähig an. Infolge der gegensinnigen Anordnung der Schrägungsrichtung der Sonnenräder 7 können die einander entgegengesetzt gerichteten Axialkräfte der Steckwellen 3, 4 am Ausgleichsstern 8 kompensiert werden. In der hier gezeigten Version sind die Anlagepilze 14, 15 einteilig mit dem Ausgleichsstern 8 gebildet.

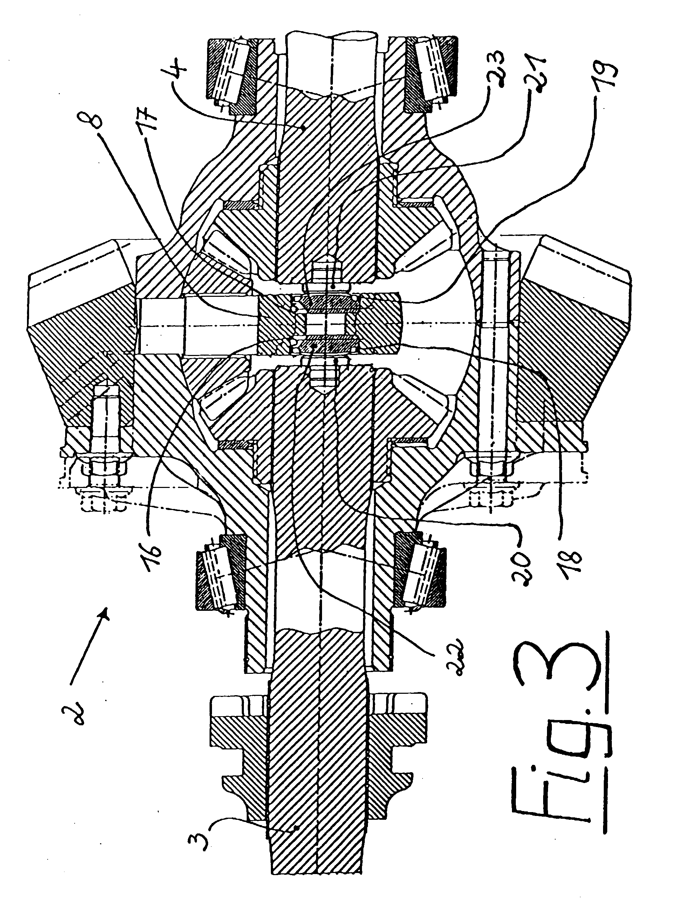

Fig. 3 zeigt als vergrößerten Ausschnitt einer zweiten Ausführungsart einer Außenplaneten-Achse ein Ausgleichsgetriebe 2 mit einem mehrteiligen Ausgleichsstern 8. In dem Ausgleichsstern 8 sind innerhalb von Axialbohrungen 16, 17 separate Anlagepilze 22, 23 angeordnet und durch Sprengringe 18, 19 fixiert. Die separaten Anlagepilze 22, 23 des Ausgleichssternes 8 sind von Gleitsteinen 20, 21 konfrontiert, die stirnseitig in die ausgleichssternseitigen Enden der Steckwellen 3, 4 eingesetzt sind. Gemäß einer hier nicht gezeigten Version können einteilig mit dem Ausgleichsstern 8 gebildete Anlagepilze von steckwelleninternen Gleitsteinen konfrontiert sein. In umgekehrter Weise können im Ausgleichsstern fixierte, separate Anlagepilze unmittelbar an entsprechend gehärteten, stirnseitigen Enden von Steckwellen gleitfähig anliegen.

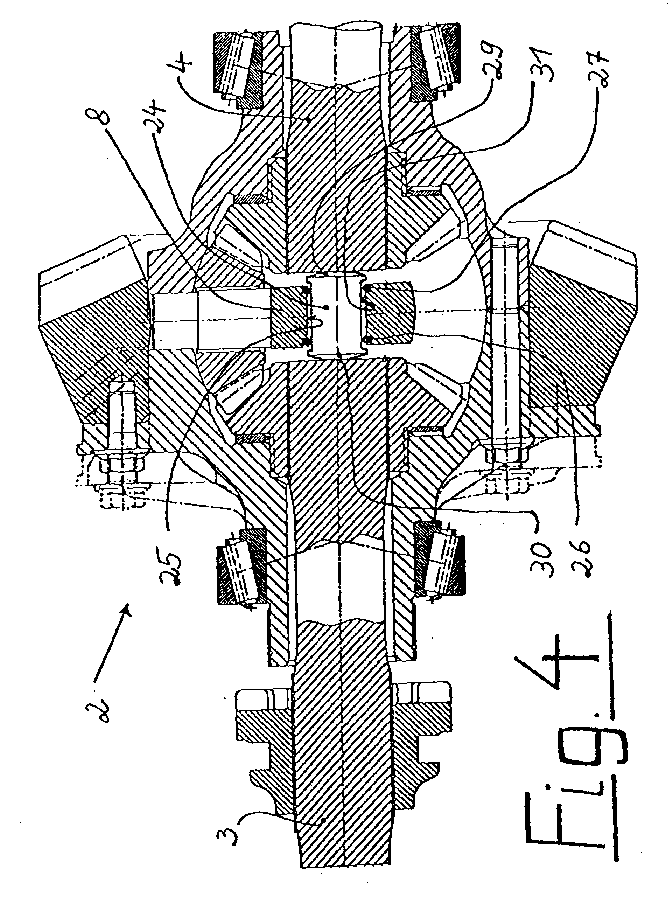

Fig. 4 zeigt als vergrößerten Ausschnitt einer dritten Ausführungsart einer Außenplaneten-Achse ein Ausgleichsgetriebe 2 mit einem einen axial frei beweglichen Gleitzapfen 24 tragenden Ausgleichsstern 8. Der Gleitzapfen 24 ist zur beiderseitigen Axialabstützung der an diesem gleitfähig anliegenden Steckwellen 3, 4 vorgesehen. Der Gleitzapfen 28 weist hierzu stirnseitige Anlageflächen 29, 30 auf, die an den Stirnseiten der Steckwellen-Enden 3, 4 gleitfähig anliegen. Zur Aufnahme des Gleitzapfens 24 weist der Ausgleichsstern 8 eine axiale Durchgangsbohrung 25 auf. Innerhalb dieser ist der Gleitzapfen 24 mittels Sicherungselementen 26, 27 gehalten. In einer anderen, hier nicht gezeigten Version können die Sicherungselemente entfallen. Der Gleitzapfen kann mit oder ohne Ringnut 31 ausgestattet sein.

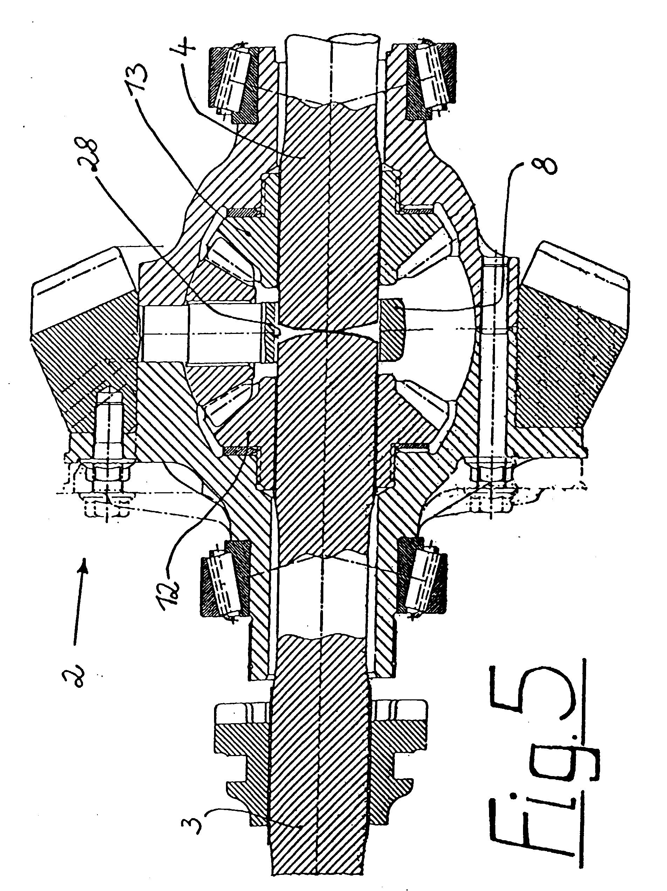

Fig. 5 zeigt als vergrößerten Ausschnitt einer vierten Ausführungsart einer Außenplaneten-Achse ein Ausgleichsgetriebe 2 mit in dessen Zentralbereich sich axial abstützenden Ende der Steckwellen 3, 4. Der Ausgleichsstern 8 des Ausgleichsgetriebes 2 weist eine bezüglich der Querschnitte der Steckwellen 3, 4 querschnittsgrößere, axiale Durchgangsbohrung 28 zur spielfreien Aufnahme der Steckwellen 3, 4 auf. Die stirnseitigen Enden der Steckwellen 3, 4 können gewölbt oder gerade ausgeführt sein.

Fig. 6 zeigt als vergrößerten Ausschnitt einer Außenplaneten-Achse gemäß Fig. 1 ein Planetengetriebe 5. Bei der Darstellung des Planetengetriebes 5 ist in der oberen Hälfte der Fig. 6 ein schrägverzahntes, auf der Steckwelle 3 angeordnetes und mit schrägverzahnten Planetenrädern 6 kämmendes Sonnenrad 7 gezeigt, während die untere Hälfte der Fig. 6 ein geradverzahntes Planetengetriebe gemäß dem heutigen Stand der Technik dokumentiert. Gleiches gilt für die Darstellung des Planetengetriebes in Fig. 7. Das auf der Steckwelle 3 sitzende Sonnenrad 7 ist über das an seiner fahrzeugaußenseitigen Stirnseite anliegende Nadellager 9 axial gegen den Anlagering 10 der Radnabe abgestützt. Anstelle eines Nadellagers 9 kann auch ein Kegelrollenlager 11 (Fig. 7) oder ein hier nicht gezeigtes Vierpunktlager oder ein Schrägkugellager vorgesehen sein. Die zur Abstützung der Axialkraft an den Steckwellen bzw. den Sonnenrädern vorgesehenen Abstützelemente wie Lager und Anlagepilze oder dergleichen können je nach Erfordernis beliebig miteinander kombiniert werden.

In einer hier nicht gezeigten Version können die Planetengetriebe auch Sonnenräder mit Doppelschrägverzahnung aufweisen. Dies hat den Vorteil, daß auch gelenkte Außenplaneten-Achsen an ihren Planetengetrieben mit geräuschmindernder Schrägverzahnung ausgestattet werden können.

## Patentansprüche

1. Außenplaneten-Achse (1) für Kraftfahrzeuge mit einem an einem Fahrzeugantrieb angeschlossenen Ausgleichsgetriebe (2) und von diesem über Steckwellen (3, 4) angetriebenen, an Radnaben angeordneten Planetengetrieben (5), dadurch gekennzeichnet, daß die Planetengetriebe (5) schrägverzahnte Sonnenräder (7) mit zueinander gegensinnig gerichteter Schrägungsrichtung aufweisen, und daß die axiale Abstützung der Sonnenräder (7) radnabenseitig durch sich an Radnaben abstützende Lager (9, 11) und ausgleichsgetriebeseitig durch mit den Sonnenrädern (7) verbundene, sich im Zentralbereich des Ausgleichsgetriebes (2) abstützende Steckwellen (3, 4) gegeben ist.

2. Außenplaneten-Achse nach Anspruch 1, dadurch gekennzeichnet, daß zur Axialbstützung die Enden der Steckwellen (3, 4) im Zentralbereich des Ausgleichsgetriebes (2) stirnseitig unmittelbar an Anlagepilzen (14, 15) eines getriebeinternen Ausgleichssternes (8) gleitfähig anliegen, und daß die Anlagepilze (14, 15) einteilig mit dem Ausgleichsstern (8) gebildet sind.

3. Außenplaneten-Achse nach Anspruch 1, dadurch gekennzeichnet, daß zur Axialabstützung die Enden der Steckwellen (3, 4) im Zentralbereich des Ausgleichsgetriebes (2) stirnseitig eingesetzte Gleitsteine (20, 21) tragen, die an im Ausgleichsstern (8) gelagerten, separaten Anlagepilzen (22, 23) gleitfähig anliegen.

4. Außenplaneten-Achse nach Anspruch 3, dadurch gekennzeichnet, daß die separten Anlagepilze (22, 23) in Axialbohrungen (16, 17) im Ausgleichsstern (8) angeordnet und durch Sprengringe (18, 19) im Ausgleichsstern (8) fixiert sind.

5. Außenplaneten-Achse nach Anspruch 1, dadurch gekennzeichnet, daß zur Axialabstützung die Enden der Steckwellen (3, 4) im Zentralbereich des Ausgleichsgetriebes (2) gegenseitig an einem im Ausgleichsstern (8) axial frei beweglich angeordneten Gleitzapfen (24) gleitfähig anliegen, und daß der Gleitzapfen (24) in einer axialen Durchgangsbohrung (25) im Ausgleichsstern (8) angeordnet und durch Sicherungselemente (26, 27) im Ausgleichsstern (8) gehalten ist.

6. Außenplaneten-Achse nach Anspruch 1, dadurch gekennzeichnet, daß zur Axialabstützung die stirnseitigen Enden der Steckwellen (3, 4) im Zentralbereich des Ausgleichsgetriebes (2) unmittelbar aneinanderliegen und die Enden der Steckwellen (3, 4) eine querschnittsgrößere, axiale Durchgangsbohrung (28) im Ausgleichsstern (8) spielfrei durchgreifen.

7. Außenplaneten-Achse nach Anspruch 1, dadurch gekennzeichnet, daß die mit den Steckwellen (3, 4) verbundenen Sonnenräder (7) radnabenseitig durch sich an Anlageringen (10) der Radnaben abstützendes Nadellager (9) einseitig axial fixiert sind.

8. Außenplaneten-Achse nach Anspruch 1, dadurch gekennzeichnet, daß die Planetengetriebe (5) Sonnenräder mit Doppelschrägverzahnung aufweisen.

## Claims

1. Planetary hub reduction axle (1) for motor vehicles with a differential gear (2) connected to a vehicle's drive unit and planetary gears (5) driven by said differential gear (2) via half-shafts (3, 4) and arranged around wheel hubs, characterised in that the planetary gears (5) have helical-toothed sun gears (7) whose helical gearing runs in an opposite direction relative to each other and that the axial support of the sun gears (7) is provided, at the wheel hub end, by bearings (9, 11) supported on the wheel hubs and, at the differential gear end, by half-shafts (3, 4) connected to the sun gears (7) and supported in the central area of the differential gear (2).

2. Planetary hub reduction axle according to Claim 1, characterised in that for their axial support the end faces of the half-shafts (3, 4) directly contact in a sliding manner the contact mushrooms (14, 15) of a gear-internal differential spider (8) in the central area of the differential gear (2) and that the contact mushrooms (14, 15) are of a piece with the differential spider (8).

3. Planetary hub reduction axle according to Claim 1, characterised in that for their axial support the end faces of the half-shafts (3, 4) bear inserted sliding blocks (20, 21) in the central area of the differential gear (2), which slide rings contact in a sliding manner separate contact mushrooms (22, 23) supported in the differential spider (8).

4. Planetary hub reduction axle according to Claim 3, characterised in that the separate contact mushrooms (22, 23) are arranged in axial bores (16, 17) in the differential spider (8) and kept in a fixed position in the differential spider (8) by circlips (18, 19).

5. Planetary hub reduction axle according to Claim 1, characterised in that for their axial support the ends of the half-hafts (3, 4) contact in a sliding manner opposite sides of a sliding pin (24) which is arranged in an axially floating manner in the differential spider (8) in the central area of the differential gear (2) and that the sliding pin (24) is arranged in an axial through-hole (25) in the differential spider (8) and kept in place in the differential spider (8) by means of retaining elements (26, 27)

6. Planetary hub reduction axle according to Claim 1, characterised in that for their axial support the end faces of the half-shafts (3, 4) directly contact each other in the central area of the differential gear (2) and that the ends of the half-shafts (3, 4) penetrate without play an axial through-hole (28) in the differential spider (8), said through-hole (28) having a larger cross-section.

7. Planetary hub reduction axle according to Claim 1, characterised in that the sun gears (7) connected with the half-shafts (3, 4) are, at the wheel hub sides, axially fixed on one side by means of needle bearings (9) supported on contact rings (10) of the wheel hubs.

8. Planetary hub reduction axle according to Claim 1. characterised in that the planetary gears (5) have sun gears with double helical gearing.

## Revendications

1. Pont planétaire (1) pour véhicules à moteur comprenant un différentiel (2) raccordé au moteur d'entraînement du véhicule et des réducteurs planétaires (5), entraînés par celui-ci au moyen d'essieux (3, 4), disposés sur les moyeux des roues,
caractérisé en ce que
• les réducteurs planétaires (5) présentent des roues solaires (7) à denture hélicoïdale avec des sens d'obliquité de la denture inverses l'un de l'autre, et
• la venue en appui axiale des roues solaires (7) du côté du moyeu des roues est obtenue par des roulements (9, 11), qui prennent appui sur les moyeux des roues, et par des essieux (3, 4) reliés du côté du différentiel aux roues solaires (7), et prenant appui dans la zone centrale du différentiel (2).

2. Pont planétaire selon la revendication 1,
caractérisé en ce que
• les extrémités des essieux (3, 4) reposent en pouvant glisser pour venir en appui axialement dans la zone centrale du différentiel (2) du côté frontal directement sur des champignons d'appui (14,; 15) d'un croisillon de satellite (8) interne au différentiel, et
• les champignons d'appui (14, 15) sont constitués d'un seul tenant avec le croisillon de satellite (8).

3. Pont planétaire selon la revendication 1,
caractérisé en ce que
les extrémités des essieux (3, 4) portent pour venir en appui axialement dans la zone centrale du différentiel (2) des blocs de glissement (20, 21), insérés du côté frontal, qui reposent en pouvant glisser sur des champignons d'appui (22, 23) séparés, montés dans le croisillon de satellite (8).

4. Pont planétaire selon la revendication 3,
caractérisé en ce que
les champignons d'appui (22, 23) séparés sont disposés dans des alésages axiaux (16, 17) dans le croisillon de satellite (8) et sont fixés dans le croisillon de satellite (8) par des anneaux détachables (18, 19).

5. Pont planétaire selon la revendication 1,
caractérisé en ce que
• pour leur venue en appui axiale les extrémités des essieux (3, 4) reposent en pouvant glisser dans la zone centrale du différentiel (2) en sens contraire sur un pivot de glissement (24) disposé dans le croisillon de satellite (8) librement mobile dans le sens axial, et
• le pivot de glissement (24) est disposé dans un alésage axial (25) de passage dans le croisillon de satellite (8) et est maintenu par des éléments de blocage (26, 27) dans le croisillon de satellite (8).

6. Pont planétaire selon la revendication 1,
caractérisé en ce que
pour leur venue en appui axiale les extrémités frontales des essieux (3, 4) reposent directement l'une contre l'autre dans la zone centrale du différentiel (2) et les extrémités des essieux (3, 4) traversent librement un alésage de passage axial (28) de section transversale plus grande dans le croisillon de satellite (8).

7. Pont planétaire selon la revendication 1,
caractérisé en ce que
les roues solaires (7), reliées aux essieux (3, 4), sont fixées axialement d'un seul côté, du côté des moyeux de roues par des roulements à aiguilles (9) qui prennent appui sur des bagues d'appui (10) des moyeux des roues.

8. Pont planétaire selon la revendication 1,
caractérisé en ce que
les réducteurs planétaires (5) présentent des roues solaires avec une denture en chevrons.
